# EUROPEAN PATENT APPLICATION

(11) **EP 1 911 949 A2**
(43) Date of publication of application: **16.04.2008**
(21) Application number: 07254007.3
(22) Date of filing: 09.10.2007
(51) Int. Cl.: F02C 9/26, F02C 9/28

(54) **Gas turbine engine control**

(30) Priority: 13.10.2006 GB 0620310
(71) Applicant: Rolls-Royce plc, London SW1E 6AT (GB)
(72) Inventor: Hill, David Charles, Milford Belper Derbyhire DE56 0RF (GB); Griffin, Ian Allen, Crookes, Sheffield, S10 1WF (GB)
(74) Representative: Gunn, Michael Alan

(57) **Abstract**

Engine control arrangement utilise a number of potential control loop regimes optimised for particular engine conditions. These loops may relate to transient conditions or engine steady state. The choice of engine control loop is made by a selector by the error divergence between measured signals and reference signals. These reference signals generate adjustment demands for the engine. It is possible for the nature of the selector to select the steady state control loop prior to acquisition of the desired target performance criteria. The steady state control loop will take longer to achieve the optimum performance conditions. The present invention provides for a multiplier (16), such as squaring of the error divergence (15), in order to retain authority for the transient control loop control beyond the normal selector determined error divergence criteria.

## Description

The present invention relates to engine control and more particularly to engine control with respect to gas turbine engines utilised with respect to aircraft propulsion.

Design and operation of gas turbine engines is relatively well known. In short a gas turbine engine can be described as having four functional stages that is to say suck, compress, combust and blow. Within these four stages it is necessary to appropriately control engine functions in order to achieve the greatest efficiency. With respect to aircraft propulsion as well as other situations the operational demands upon the gas turbine engine will vary. For example, with a gas turbine engine for aircraft propulsion it will be understood that the engine demands will be different with respect to takeoff and landing and acceleration/deceleration compared to steady state cruising. In such circumstances, gas turbine engine control systems make use of a number of control loops. Each one of these control loops is designed to handle the engine under different operating conditions and in response to different power/thrust level demands. Only one of these control loops can be in command of the engine at any one time and it is therefore necessary to transfer control between loops at certain points in the operating regime.

The time scales upon which the engine operates are of critical safety importance. The engine is required to accelerate from idle quickly enough to power a 'go-around' in the event of an aborted landing and decelerate fast enough to allow the aircraft to stop on the runway in the event of an aborted takeoff. However, the rates of acceleration and deceleration are limited by the compressor surge margin(s) of the engine so a tradeoff exists between flight safety and engine stability. This results in the need for acceleration/deceleration controllers to handle the engine correctly during a transient.

The point at which the acceleration and deceleration control loops surrender control of the engine at the end of a transient manoeuvre impacts upon the handling times of the engine. The steady state loop can only move the engine safely in a transient condition at a sub-optimal rate. Therefore, the earlier the steady state loop regains control of the engine at the end of a transient, the slower the final stages the transient operations will be.

In short, the control loops associated with acceleration and deceleration are optimised with respect to the particular propulsion for necessary acceleration or deceleration such that the normal steady state control loop for the engine typical when that engine is cruising will not perform unnecessary acceleration or deceleration in optimum fashion in terms of rapidity etc.

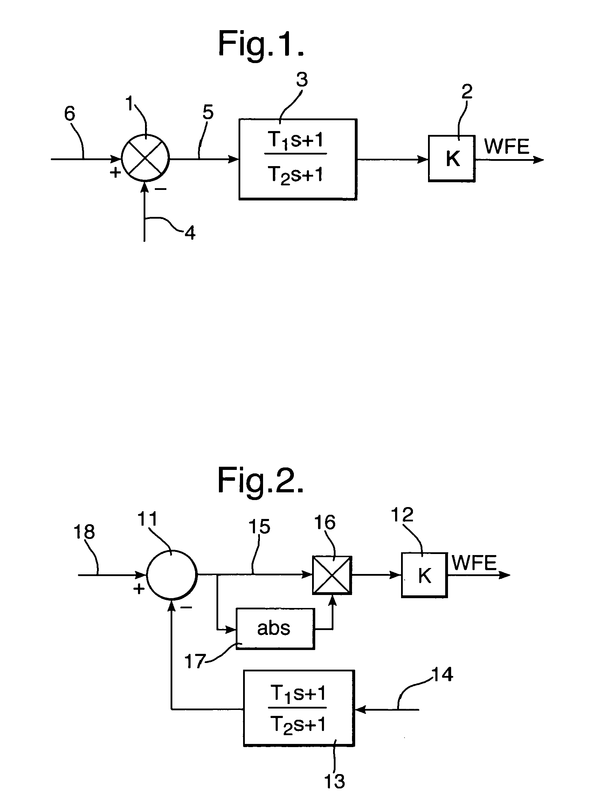

Gas turbine engine control systems employ three types of control loops: power setting loops, maximum/minimum limiting loops and transient control loops. Power setting loops keep the engine at the demanded power/thrust across the majority of the operating envelope. Maximum/minimum limiting loops prevent engine parameters from exceeding absolute limits imposed upon them and transient control loops regulate the rate of acceleration and deceleration of the engine. The majority (if not all) of these loops employ feedback for calculating the required control signal. This is universally true for power setting and limiter control loops. Certain control architectures do however use an additional forcing function and/or pure open loop control for transient control loops. Figure 1 below shows the structure of a steady state feedback loop in which a unity-gain lead compensator and gain act in series upon the error between the desired value of the parameter (reference signal) and the actual measured value. The resulting control signal is the rate of change of fuel flow demand, WFE value.

The known strategy used for control of gas turbine engines employs a number of control loops operating in parallel. Each control loop attempts to fulfil a different function by calculating a WFE value that would bring the engine to a given condition e.g. a given rate of acceleration, power level or a minimum or maximum value of an engine parameter. Based on the power/thrust demand and the current state of the engine, the most appropriate loop is then selected to take control of the engine for any given mode of operation. This is known as selector control.

A selector is an array of highest wins/lowest wins gates. These gates are configured to select the most appropriate loop for the engine condition. The WFE value from the selected loop is then input to an integrator, the output of which provides the fuel flow demand.

The thrust must be controlled according to the power lever angle set for the engine whilst maintaining certain engine parameters within specified ranges. In order to prevent a low thrust demand from pushing an engine parameter below its minimum allowed value, a highest wins (HW) gate is used. When the limited parameter reaches its lowest allowed value, the WFE value from that loop would be zero due to the zero error in the limiter loop whilst the WFE value in the thrust loop would be negative as it attempted to meet the low thrust demand. The WFE value from the limiter loop would therefore pass through the gate.

In order to prevent a high thrust demand from pushing an engine parameter above its maximum allowed value, a lowest wins (LW) gate is used. When the limited parameter reaches its highest allowed value, the WFE value from that loop would be zero due to the zero error in the loop whilst the WFE value in the thrust loop would be positive as it attempted to meet the high thrust demand. The WFE value from the limiter loop would therefore pass through the LW gate.

The use of rate of change of fuel flow as input to the selector allows transient rates to be limited in the same way. The rate of acceleration is limited using an LW gate. During acceleration, when the thrust demand increases, a large positive error appears in the thrust setting loop resulting in a very large, positive WFE value. This will exceed the WFE value from the acceleration control loop, which will therefore pass through the LW gate. As the engine moves closer its new demand thrust level, the error in the thrust control loop will decrease, hence reducing the WFE value from this loop. When the error in the thrust loop becomes sufficiently small, the resulting WFE value becomes lower than the WFE value from the acceleration loop and the thrust control loop passes through the LW gate, regaining control of the engine.

The rate of deceleration is limited using an HW gate. During deceleration, when the thrust demand decreases, a large negative error appears in the thrust setting loop resulting in a very large, negative WFE value. This will be lower than the WFE value from the deceleration control loop, which will therefore pass through the HW gate. As the engine moves closer its new demand thrust level, the error in the thrust control loop will reduce in magnitude, hence raising the value of the WFE value from this loop. When the error in the thrust loop becomes of sufficiently high value, the resulting WFE value becomes higher than the WFE value from the deceleration control loop and the thrust control loop passes through the HW gate, regaining control of the engine.

It will be appreciated that selective control in principle achieves the desired improvements for optimisation with respect to gas turbine engine control for wide variations of error in measured and desired fuel flow demand but as the measured and desired fuel flow demand error divergence, that is to say the error is reduced through a selective control procedure and so prematurely transfers control to the steady state control loop rather than persists with the necessary control loop to more rapidly optimise fuel flow demand in a shorter period of time.

In accordance with the present invention there is provided an engine control arrangement for controlling a gas turbine engine, the arrangement comprising a controller and means to determine engine performance or desired engine performance, the controller including a plurality of control loops, each control loop arranged to provide a control signal for engine control dependent upon objective criteria, and the controller including a selector for determination of the control loop for actual engine control dependent upon current or desired engine performance determined by the means to determine engine performance and/or desired engine performance, the selector utilising error divergence between the respective control signals provided by the respective control loops and a representative signal for current or desired engine performance and the error divergence for the control loop determined by the selector subject to a multiplier to sustain use of the control loop until approaching parity between the control signal of the control loop selected by the selector and the representative signal for current or desired engine performance.

Preferably, the multiplier provides a squaring function upon the error divergence. Typically, the controller includes means to ensure that the error divergence subject to the multiplier is at least greater than unity.

Typically, the objective criteria relates to power setting or performance limits of the engine or performance transient for the engine. Typically the error divergence will be arranged such that when subject to the multiplier it is always greater than 1. If the error divergence should attain a value less than 1 then the controller includes means to shift the respective control signal and/or the representative signal scale to a limiting error greater than 1.

Preferably, the controller incorporates a lookup table defined by reference points for the error divergence and resultant error divergence when subject to the multiplier. Typically, the controller provides for interpolation and extrapolation between reference points in the lookup table whereby a curve between those reference points provides the operative error divergence to sustain use of the control loops selected by the selector. Typically, the slope between the reference points is variable in the lookup table in order to provide differing degrees of bias towards sustaining use of the control loop selected by the selector.

Possibly, below a predetermined limit for the error divergence the controller is arranged not to subject that error divergence to the multiplier in order to sustain use of the selected control loop.

Possibly, the lead time constant and/or lag time constant are also adjusted to dampen fluctuations in the error signal particularly at low values of error.

Also in accordance with the present invention there is provided a gas turbine engine incorporating an engine control arrangement as described above.

Embodiments of the present invention will now be described by way of example only with reference to the accompanying drawings in which:-
Figure 1 provides a schematic illustration of a typical control loop determination for engine control arrangements;
Figure 2 provides a schematic illustration of a first embodiment of an engine control arrangement in accordance with the present invention;
Figure 3 is a schematic illustration of a second embodiment in accordance with the present invention; and,
Figure 4 provides a graphic representation of variation in multiplying factors dependent upon error value.

As indicated above it is generally known to utilise control loops in order to operate gas turbine engines. As indicated above these control loops may relate to power setting and maximum/minimum operating limits and transient control loops. Power setting loops keep the engine at the demanded power/thrust across the majority of the operating range for the engine. Maximum/minimum limiting control loops prevent engine parameters from exceeding limits imposed by the capabilities of the engine components and transient control loops regulate the rate of acceleration and/or deceleration of the engine. It will be understood that an engine generally operates for most of the time under the steady state control loop regime. This steady state control loop generally operates the engine most efficiently and therefore has considerations with respect to fuel consumption along with wear and tear on the engine with respect to servicing intervals and maintenance. It is thus an objective to arrange for the engine to enter the steady state control loop regime as efficiently as possible so that as described above a selector is used to decide which control loop will provide the current engine control loop when difficulties arise with premature selection of the steady state control loop for example when the error divergence approaches zero. It is in the nature of the control regimes that premature entry to the steady state control regime will generally mean that requirement of the actual necessary parameters for steady state control will take longer to acquire as the steady state control regime is not optimised with respect to alteration of parameters.

The present invention relates to means by which the steady state control loop and other control loops can be used as inputs to the selector and also to the most effective means to acquire the desired control loop for operational performance.

Figure 1 illustrates a previous approach to selector operation which will result in a steady state control loop prematurely controlling the engine significantly before transient conditions in the engine have been completed. This premature entry to the steady state control regime is as a result of the magnitude of the error divergence from the steady state control loop falling below that of the transient control loop as the error is reduced. As indicated above, it is by choice of the error divergence between the control signal comparisons of the various control loops that is utilised by the selector in order to select the current engine control loop and control the engine. As can be seen in Figure 1 essentially for choice of control loop a reference signal 6 and a measured signal 4 are compared in the comparator 1 in order to determine an error signal 5 which is then presented to a selector via a feedback control 3. A conversion device 2 then processes the error signal 5 provided via the feedback control 3 to provide a control signal WFE for comparison with values from other control loops for selection as required. The feedback control processes adjusts the error based upon a ratio between a lead time constant T1 and a lag time constant T2 set for engine performance in terms of signal response times.

By restructuring the steady state control loops in such a way that they will regain control of the engine as late as possible in the transient control arrangement allows the transient controllers to maintain control of the engine as long as possible. This will result in faster responses, bringing the engine to the final thrust level more rapidly without impacting upon engine surge protection.

In order to maintain operation of the engine with respect to the transient control loops for a longer period of time in accordance with the present invention an error squared control function multiplier is provided in conjunction with the selective control in order to extend the portion of the transient manoeuvre for which the transient control loop is active. By squaring the error, the WFE is forced higher than in the previous arrangements as the value approaches its thrust target. The squaring multiplier approach assumes the error is greater than unity hence allows the transient control loop to gain or retain control of the engine through the relevant gate selector until the engine thrust is much closer to the necessary reference value. Once transferred to the steady state loop is performed, if alterations are required with respect to engine parameters, that steady state engine control loop in effect by accentuating the error divergence or differential bias provided towards the transient control loop to perform the necessary transition as transfer to or retention of control by the steady state control loop is less suitable for performing transient changes in the engine performance.

If necessary the scale of measured signals can be adjusted if the parameter used results in an error divergence of less than one for significant differences between demanded and achieved steady state values. Figure 2 illustrates a typical error squared control loop necessary to perform the present invention.

As can be see a measured signal 14 is again presented to a comparator 11 for comparison with a reference signal 18. The measured signal 14 is presented via a feedback control 13 to the comparator. An error signal 15 is then presented to a multiplier 16 in accordance with the present invention. It will be noted that an absolute value device 17 may be utilised if the error signal is negative. The multiplier 16 essentially multiplies the error presented to the gain device 12 whereupon the control signal WFE is generated. It will be appreciated that the multiplied error generated by the multiplier device 16 may cause undue fluctuation at low deviation or error factors with respect to the measured signal. It will be understood that any measured signal has a detection accuracy and thus variations in that accuracy may render the error signal 15 generated alternatively positively and negative in such circumstances there can be control loop "bounce" with respect to the control signal WF generated for comparison in the selector in order to determine the appropriate control loop to continue operation of the engine. In such circumstances in order to avoid this problem, variations in the lead time constant T1 or lag time constant T2 may be made to compensate for such fluctuations and create damping.

Through a combination of error divergence squared multiplier control with a selector structure for determining the control loop under which the engine will be operated it will be understood a means of regulating "handover" points by the selector between the control loops is provided which is more optimised to transient conditions such as those present during acceleration or deceleration.

It is important that the squared multiplier control is not further emphasised by other compensating factors within a control feedback path. Thus, it is essential to incorporate any lead compensator in the control feedback path utilised for squared error control to avoid the error signal being further emphasised and amplified by phase lead in the signal comparison. This is achieved through the feedback control 13.

By use of squared amplification as a multiplier it will be understood that premature handover from the transient control loop to the steady state control loop at the end of a transient manoeuvre is resisted. In this way the transient control loops maintain authority over engine function for a longer operational period and accelerate/decelerate in the ambient or current value to its target power level more rapidly achieved.

As indicated above it is important that the correct control loop is chosen for engine operation. Thus, error squared multiplication of the error divergence between the measured and reference signals will only occur after lead compensation determination has been provided, that is to say the selector has chosen the control loop to be utilised based upon conventional error divergence considerations at each control loop. Once the correct control loop has been chosen, typically the transient control loop for deceleration or acceleration, the usual procedures with respect to periodic monitoring of that control loop to establish approach to the target values necessary for transfer of the control regime to that of the steady state control loop will be performed with the error squared multiplier only applied when there is a small error divergence. The actual point at which the present multiplier will be utilised will depend upon engine conditions and operational requirements but as indicated the present engine control arrangement will be utilised particularly with respect to the final stages between handover of control loops and error divergence will be small although arranged to provide a greater than unity error in order to utilise the multiplier effect. It should be understood that other multipliers other than squared may be used such as cube or a fixed number regime.

As indicated it is the emphasising effect of applying a multiplier to the error divergence as parity is approached between the measured and reference signals for selective determination by the selector as to the control loop given authority to control the engine. In such circumstances differing multipliers may be applied at different stages with respect to the error divergence in order to achieve best performance. In such circumstances effective bands of error divergence will be created in terms of ranges of divergence and in such circumstances a different multiplier applied in each different error divergence band. By such an approach when the error divergence is quite significant, a lower multiplier may be applied as it will then be less necessary to emphasis the error divergence in order to maintain transient control loop authority whilst when the error divergence is much smaller a higher multiplier may be applied in order to emphasise and maintain transient control loop authority compared with other control loops.

The present invention may be achieved by providing a processor in order to act as a controller for the engine control arrangement. This processor will perform all the necessary comparisons and multiplier emphasis with respect to error divergence for the transient control loop in order to retain its authority. Each comparison and multiplier emphasis with respect to error divergence may be individually performed. Alternatively, and most preferably, a lookup table approach may be taken. In the lookup table effectively reference points are provided to define a curve between abscissa axis error divergence values and in the ordinate axis resultant multiplier error divergence values for use in the selector process. Between these points the curve may be arranged to have different attitudes and gradients such that through extrapolation intermediate points in terms of error divergence are utilised in order to provide multiplier determined error divergence values for utilisation by the selector. In such circumstances either of the highest or the lowest closest reference points may be used or through gradient extrapolation an intermediate value generated for use by the selector after appropriate gain. In either event, the error divergence is multiplied by the applicable multiplier value e.g. squared, cubed and so bias retention of the transient control loop authority for engine control for a longer period of time such that when handover to the steady state control loop is performed the engine operating parameters will be much closer to the target values for that steady state operation and therefore adjustments required by the steady state control loop will be much reduced.

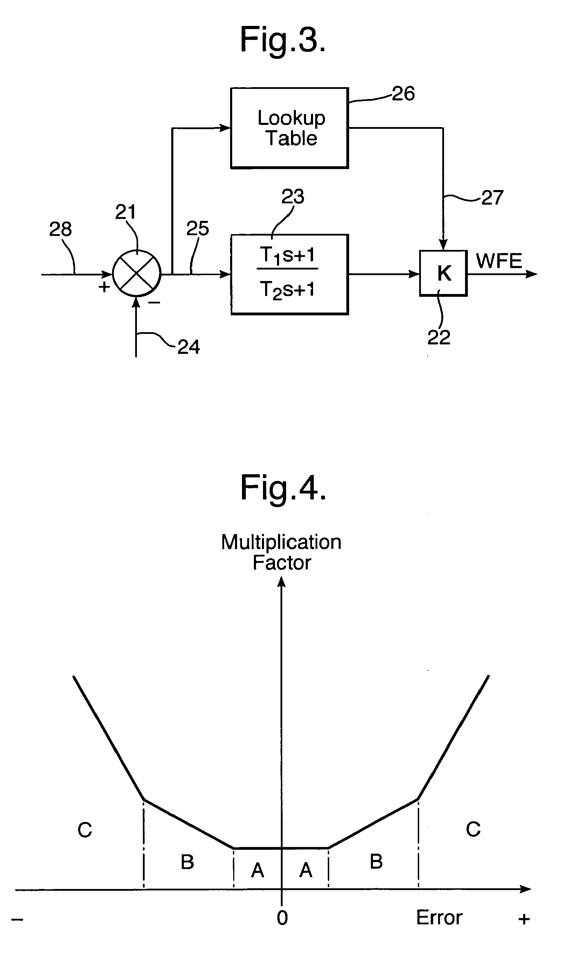

Fig. 3 illustrates operation of a control loop in accordance with a look up table variant of the present invention. Thus, a measured signal 24 is again presented to a comparator 21 for comparison with a reference signal 28 in order to generate an error signal 25. This error signal 25 is utilised in a look up table 26 in order to generate the appropriate error signal 27 for presentation to a gain device 22. As previously, a feedback control device 23 is provided in order to account for lead and lag with respect to the measured signal in particular and processing within the comparator 21. In any event the gain device 22 generates a control signal WFE which is then utilised by a selector (not shown) in order to determine which of the control loops will continue to operate the engine.

As indicated above the benefit of the look up table 26 is the ability to apply different multiplier factors at different error divergences between the reference signal 28 and the measured signal 24. Thus, as depicted in Fig. 4 providing a graphic representation of that variation in multiplying factors dependent upon error value, it will be seen that bands A, B, C are provided either side of the zero error value. Thus, these bands A. B, C have respective multiplier gradients provided by the curve 30 and so the bias towards retention of the particular control loop therefore adjusted dependent upon the error signal 25. In such circumstances, tailoring of the curve 30 can be performed in order to provide enhanced respective performance with respect to each control loop.

It will be understood that an engine as indicated has a large number of control loops, and it is choice of these control loops which is the principle function of the present invention. By creating emphasis and bias towards the transient control loop in order to retain control by that transient control loop until the objective target performance parameters are achieved and overall engine performance is improved.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. An engine control arrangement for controlling a gas turbine engine, the arrangement comprising a controller and means to determine engine performance or desired engine performance, the controller including a plurality of control loops, each control loop arranged to provide a control signal for engine control dependent upon objective criteria and the controller including a selector for determination of the control loop for actual engine control dependent upon current or desired engine performance determined by the means to determine engine performance and/or desired engine performance, the selector utilising error divergence between the respective control signals provided by the respective control loops and a representative signal for current or desired engine performance **characterised in that** the error divergence for the control loop determined by the selector is subject to a multiplier (16) to sustain use of the control loop until approaching parity between the control signal of the control loop selected by the selector and the representative signal for current or desired engine performance.

2. An arrangement as claimed in claim 1 **characterised in that** the multiplier (16) provides a squaring function upon the error divergence.

3. An arrangement as claimed in claim 1 or claim 2 **characterised in that** the controller includes means to ensure that the error divergence subject to the multiplier (16) is at least greater than unity.

4. An arrangement as claimed in any of claims 1 to 3 **characterised in that** the objective criteria relates to power setting or performance limits of the engine or performance transient for the engine.

5. An arrangement as claimed in any preceding claim **characterised in that** the error divergence is arranged such that when subject to the multiplier it is always greater than 1.

6. An arrangement as claimed in any preceding claim **characterised in that** the controller is arranged such that if the error divergence should attain a value less than 1 then the controller includes means to shift the respective control signal and/or the representative signal scale to a limiting error greater than 1.

7. An arrangement as claimed in any preceding claim **characterised in that** the controller incorporates a lookup table (26) defined by reference points for the error divergence and resultant error divergence when subject to the multiplier (16).

8. An arrangement as claimed in claim 7 **characterised in that** the controller provides for interpolation and extrapolation between reference points in the lookup table (26) whereby a curve between those reference points provides the operative error divergence to sustain use of the control loops selected by the selector.

9. An arrangement as claimed in claim 7 or claim 8 **characterised in that** the slope between the reference points is variable in the lookup table (26) in order to provide differing degrees of bias towards sustaining use of the control loop selected by the selector.

10. An arrangement as claimed in any preceding claim **characterised in that** the control is arranged such that when below a predetermined limit for the error divergence the controller is arranged not to subject that error divergence to the multiplier (16) in order to sustain use of the selected control loop.

11. An arrangement as claimed in any preceding claim **characterised in that** the lead time constant and/or the lag time constant are also adjusted to dampen fluctuations in the error signal particularly at low values of error.

12. A gas turbine engine incorporating an engine control arrangement as claimed in any preceding claim.
